# EUROPEAN PATENT SPECIFICATION

(11) **EP 2 931 781 B1**
(45) Date of publication and mention of the grant of the patent: **04.11.2020**
(21) Application number: 13811324.6
(22) Date of filing: 05.12.2013
(51) Int. Cl.: C08G 59/14, C08G 59/50

(54) **MODIFIED EPOXY RESINS**
MODIFIZIERTE EPOXIDHARZE
RÉSINES ÉPOXYDE MODIFIÉES

(30) Priority: 14.12.2012 US 201261737179 P
(43) Date of publication of application: 21.10.2015
(73) Proprietor: Blue Cube IP LLC, Clayton, Missouri 63105 (US)
(72) Inventor: AGUIRRE VARGAS, Fabio, Lake Jackson, TX 77566 (US); GUO, Yinzhong, Midland, MI 48642 (US); ZHANG, Yong, Chalfont, PA 18914 (US)
(74) Representative: Greaves Brewster LLP
(86) International application number: PCT/US2013/073257
(87) International publication number: WO 2014/093117

(56) References cited:
- EP-A1- 2 341 093
- WO-A1-2012/030338
- GB-A- 1 136 112
- US-A- 4 330 644

## Description

### FIELD

The present invention is related to modified epoxy resins, more specifically amino compound-modified epoxy resin liquid compositions, curable epoxy resin compositions employing the modified epoxy resins, and thermosets prepared from the curable compositions.

### BACKGROUND

The ability to adhere well to metal substrates, to middle coating, and top coats as defined and measured for instance by the cross-hatch adhesion test (ASTM D 3359) or the Pull-Off Adhesion Test (ASTM D4541) is a very important property of epoxy coatings. Such ability to adhere will affect the degree of surface treatment required to meet coating performance requirements as well as overcoat window of the coating system to provide the desired corrosion protection. Therefore, it would be advantageous to the coating industry to provide an epoxy coating with a tolerance to slightly damp or rusted metal surfaces (as described, for instance, by the Standard from the Society for Protective Coatings SSPC-ME-1); and an epoxy coating capable of being coated after several weeks of exposure to ambient conditions (or, in other words, having a long "overcoat window"). An epoxy coating with such properties can significantly reduce the application cost and enhance the long term performance of the coating system.

Although there are several patents describing a way to improve surface tolerant or overcoat window, no prior art has been found using an alkanolamine-modified epoxy resin in liquid form or in solution to improve both surface tolerant and overcoat window of epoxy coatings.

For example, U.S. Patent No. 4,330,644 discloses a curable composition including (1) a solid epoxy resin composition prepared by reacting (a) a solid epoxy resin prepared by reacting (i) a normally liquid epoxy resin with (ii) a polyhydric phenol in the presence of an etherification catalyst with (b) a small amount of tris(hydroxymethyl) aminomethane or tris-amino; and (2) at least one epoxy curing agent. The curable composition with the tris-amino modified solid epoxy resin improves the adhesion of powder coatings to grit blasted cold rolled steel panels.

U.S. Patent No. 7,001,938 discloses a curing agent, which includes a primary amino alcohol, for epoxy resin compositions. Specifically, the patent above relates to curing agents which include a primary amino alcohol physically blended therewith. Alternatively, the patent above relates to curing agents which include a primary amino alcohol reacted into a resinous phenolic compound. Resin systems utilizing the curing agents of the patent above exhibit enhanced hot wet adhesion to cold rolled steel panels and are particularly useful in the manufacture of powder coatings for pipe.

WO2010126962A1 discloses polyhydroxy amine compounds which are useful for paints, coatings, and epoxy formulations.

WO2005023941A1 discloses a curable alkanolamine containing epoxy powder coating composition comprising at least one epoxy resin, at least one alkanolamine, a curing agent in an amount effective to cure the coating and optionally at least one zinc borate compound. Further, WO2005023941A1 provides a method of cathode corrosion protection which includes the steps of subjecting a metal substrate to a mechanical treatment, applying the curable alkanolamine containing epoxy powder coating composition to the surface of an optimally cleaned metal substrate, and polarizing the coated material as a cathode. WO2005023941A1 also relates to a process for making and applying the alkanolamine containing epoxy powder coating compositions of the present invention.

U.S. Patent No. 5,008,351; U.S. Patent No. 4,851,486; and EP292731(B1) disclose self-crosslinking cationic paint binders based on ureide-modified epoxy resins. The preparation of the binders and their use, particularly in electro-deposition paints, is also described. The ureide-modified epoxy resins are prepared by reacting an epoxy resin with carboxylic compounds carrying ureide groups, blocked isocyanate groups, and optionally, tertiary amino groups. The carboxylic compounds are obtained through reaction of dicarboxylic acid anhydrides with a substituted urea or a substituted biuret. The products described in the above references show good resistance and adhesion characteristics.

JP2001288243A discloses an inexpensive urea-modified epoxy resin compound which does not pollute the environment. The urea-modified epoxy resin compound is prepared by epoxidizing a compound represented by the formula:
(B)p-Z-(A)q, wherein Z is -(CH₂)m-, wherein m is 0 or a positive integer or a group represented by formula I or II; A and B are each CH₂=CH-, CH₂=CH-CH₂-, -OCH=CH₂,-O-CH₂-CH=CH₂, -OCH₂-CH₂- CH=CH₂- or a group represented by formula III; and p and q are each 0 or a positive integer with a peroxide. JP2001288243A also describes reacting the resultant epoxy compound with urea as curing agent.

### SUMMARY

The present invention is directed to an amino compound-modified epoxy resin liquid composition including a reaction product of: (a) at least one amino compound, wherein the amino compound comprises (a1) tris(hydroxymethyl)aminomethane (THAM), in a concentration of from 1 weight percent to 3 weight percent based on the weight of the total components in the composition, or (a2) at least one urea compound, in a concentration of from 1 weight percent to 10 weight percent based on the weight of the total components in the composition; and (b) at least one liquid epoxy resin compound having a viscosity (as measured at a temperature of from -5°C to 45 °C) of from 8 mPa-s to 500,000 mPa-s; wherein the amino compound-modified epoxy resin liquid composition has a viscosity of less than 1,000,000 mPa-s as measured at a temperature of from -5°C to 45°C; the composition further comprising a phenolic compound.

The amino compound-modified epoxy resin liquid composition is useful for preparing a curable coating formulation or composition having improved coating properties such as increased overcoat window and surface tolerant.

In one embodiment, the present invention is directed to a THAM-modified epoxy resin liquid composition and to a curable composition incorporating the THAM-modified epoxy resin liquid composition useful for coating formulations or compositions.

For example, the THAM-modified epoxy resin by itself or in solution may be used for liquid coatings to enhance adhesion and overcoat window of epoxy coatings. In one preferred embodiment of the present invention, a THAM-modified liquid epoxy resin can be used as the main compound in a liquid coating useful for Maintenance and Protective Coating (M&PC) applications.

In another preferred embodiment of the present invention, the THAM-modified liquid epoxy resin can be used to improve overcoatability and surface tolerance property of epoxy coatings.

In one preferred embodiment for example, the present invention is a THAM-modified epoxy resin liquid composition used in a coating composition to extend the overcoat window by at least one order of magnitude as well as the surface tolerant of epoxy liquid coatings; such epoxy coatings having improved adhesion or surface tolerant to rusty panels prepared, for instance, according to SSPC-ME-1 and measured, for instance, by the cross-hatch adhesion test (ASTM D 3359) or the Pull-Off Adhesion Test (ASTM D4541) after at least three weeks in, for instance, a Cleveland Condensing Type Cabinet (ASTM D4585) and improved overcoat window.

In another embodiment, the present invention is directed to a urea-modified epoxy resin liquid composition and to a curable composition incorporating the urea-modified epoxy resin liquid composition useful for coating formulations or compositions.

One aspect of the present invention is directed to an amino compound-modified epoxy resin liquid composition including a reaction product of (a) at least one amino compound, wherein the amino compound comprises (a1) tris(hydroxymethyl)aminomethane (THAM), in a concentration of from 1 weight percent to 3 weight percent based on the weight of the total components in the composition, or (a2) at least one urea compound, in a concentration of from 1 weight percent to 10 weight percent based on the weight of the total components in the composition, and (b) at least one epoxy resin compound having a viscosity of from 8 mPa·s to 500,000 mPa·s; wherein the amino compound-modified epoxy resin liquid composition has a viscosity of less than 1,000,000 mPa·s as measured at a temperature of from -5°C to 45°C; the composition further comprising a phenolic compound.

Another aspect of the present invention is directed to a curable coating composition including (a) at least one amino compound-modified epoxy resin liquid composition as described above; and (b) at least one curing agent.

Still another aspect of the present invention is directed to curing the above curable coating composition to form a cured thermoset coating product.

It has been found that by using an amino compound-modified epoxy resin liquid composition (e.g. a THAM-modified epoxy resin) in a curable formulation or composition, the curable composition being cured results in a coating that exhibits improved properties, such as surface tolerant and overcoat window. For example, the overcoat window of the above coating can be extended compared to a conventional amine epoxy resin by one order of magnitude. In addition; it has been unexpectedly found that the above coating's surface tolerant property can be improved or increased compared to a conventional epoxy resin.

### DETAILED DESCRIPTION

"Surface tolerant" with reference to a coating herein means the ability of a coating to adhere and provide corrosion protection when the coating is applied over a slightly damp, chemically contaminated or rusty metal substrate such as steel; old paint; or other minimally prepared substrates. In coating applications, surface tolerant means the low requirement of surface preparation or treatment before the coating is applied. The basic standards for preparing metal substrates relevant to the present invention are described for instance by the Society for Protective Coatings (SSPC) SP1 Solvent Cleaning, SP2 Hand Tool Cleaning, and SP3 Power Tool Cleaning and in conjunction with the National Association of Corrosion Engineers International (NACE) SSPC-SP5/NACE 1 White Metal Blast Cleaning, SSPC-SP6/NACE 3 Commercial Blast Cleaning, SSPC-SP7 / NACE 4 Brush-Off Blast Cleaning, SSPC-SP10/NACE 2 Near-White Blast Cleaning, SSPC-SP11 Power Tool Cleaning to Bare Metal, SSPC-SP12 / NACE 5 Surface Preparation and Cleaning of Steel and Other Hard Materials by High- and Ultra HighPressure Water Jetting Prior to Recoating, SSPC-SP13 / NACE 6 Surface Preparation of Concrete, SSPC-SP14/NACE 8 Industrial Blast Cleaning.

"Overcoat window" or "overcoatability" or "overcoat time" with reference to a first coating herein means a window or period of time within which a second coating can be applied to the first coating resulting in good adhesion between the first and second coatings as defined for instance by the cross-hatch adhesion test (ASTM D 3359) or the or the Pull-Off Adhesion Test (ASTM D4541).

Currently, one major drawback of conventional high solids epoxy coating is the limited over-coat-ability property of the initial coating after applying the initial coating to a substrate. This drawback leads to a higher cost for a coating because of the need to provide a surface pre-treatment to the initial coating prior to applying a second coating to the initial coating; and because of the extended down times in the process of preparing a coating due to water and chemical washing and/or mechanical abrasion of the initial coating.

One broad embodiment of the present invention is directed to providing an amino compound-modified epoxy resin liquid composition including a reaction product of (a) at least one amino compound, wherein the amino compound comprises (a1) tris(hydroxymethyl)aminomethane, in a concentration of from 1 weight percent to 3 weight percent based on the weight of the total components in the composition, or (a2) at least one urea compound, in a concentration of from 1 weight percent to 10 weight percent based on the weight of the total components in the composition; and (b) at least one liquid epoxy resin compound having a viscosity (as measured at a temperature of from -5 to 45 °C) of from 8 mPa-s to 500,000 mPa-s; wherein the amino compound-modified epoxy resin liquid composition comprises a liquid having a viscosity of less than 1,000,000 mPa-s; the composition further comprising a phenolic compound.

The composition of the present invention includes at least one amino compound as component (a) to form the amino compound-modified epoxy resin liquid composition. The amino compound comprises tris(hydroxymethyl)aminomethane or at least one urea compound. The amino compound useful in the present invention may further include any conventional primary or secondary amine compound.

For example, in one embodiment, the amino compound may further comprise for example an alkanolamine, tris(hydroxymethyl)aminomethane (THAM), urea, and AMP (2-amino-2-methyl- 1 -propanol); AMPD™ (), 2-amino-2-ethyl-1-pentanol, 2-amino-2-methyl-1-heptanol, 2-amino-2-propyl-1-pentanol, 2-amino-2-heptyl- 1,3-propanediol, 2-amino-2-ethyl-1-heptanol, 2-amino-2-propyl-1-hexanol, 2-amino-2- methyl- 1-nonanol, 2-amino-2-ethyl-1-octanol, 2-amino-2-propyl-1-heptanol, 2-amino-2-nonyl-1,3-propanediol, 2-amino-2-methyl-1-decanol, 2-amino-2-ethyl- 1-nonanol, 2-amino- 2-propyl-1-octanol, 2-amino-2-butyl-1-heptanol, 2-amino-2-methyl-1-undecanol, 2-amino- 2-ethyl-1-decanol, 2-amino-2-propyl- 1-nonanol, 2-amino-2-butyl-1-octanol, 2-amino-2- pentyl-1-heptanol, 2-amino-2-undecyl-1,3-propanediol, 2-amino-2-ethyl-1-undecanol, 2-amino-2-propyl-1-decanol, 2-amino-2-butyl- 1-nonanol, 2-amino-2-pentyl-1-octanol, 2- amino-2-ethyl-1-dodecanol, 2-amino-2-propyl-1-undecanol, 2-amino-2-butyl-1-decanol, 2- amino-2-pentyl-1-nonanol, 2-amino-2-hexyl-1-octanol, 2-amino-2-methyl-1-tetradecanol, 2- amino-2-ethyl-1-tridecanol, 2-amino-2-propyl- 1-dodecanol, 2-amino-2-butyl- 1-undecanol, 2-amino-2-pentyl- 1-decanol, 2-amino-2-hexyl- 1-nonanol, 2-amino-2-ethyl- 1-tetradecanol, 2-amino-2-propyl-1-tridecanol, 2-amino-2-butyl-1-dodecanol, 2-amino-2-pentyl-1-undecanol, 2-amino-2-heptyl- 1-nonanol, 2-amino-2-methyl-1-hexadecanol, 2-amino-2-ethyl-1-pentadecanol, 2-amino-2-propyl- 1-tetradecanol, 2-amino-2-butyl- 1-tridecanol, 2- amino-2-pentyl- 1-dodecanol, 2-amino-2-hexyl- 1-undecanol, 2-amino-2-heptyl- 1-decanol, 2- amino-2-methyl- 1-heptadecanol, 2-amino-2-ethyl- 1-hexadecanol, 2-amino-2-propyl-1-pentadecanol, 2-amino-2-butyl-1-tetradecanol, 2-amino-2-pentyl-1-tridecanol, 2-amino-2-hexyl-1-dodecanol, 2-amino-2-heptyl-1-undecanol, 2-amino-2-octyl-1-decanol, 2-amino-1-nonadecanol, 2-amino-2-heptadecyl- 1,3 -propanediol, 2-amino-2-methyl-1-octadecanol, 2- amino-2-ethyl- 1-heptadecanol, 2-amino-2-propyl- 1-hexadecanol, 2-amino-2-butyl- 1-pentadecanol, 2-amino-2-pentyl-1-tetradecanol, 2-amino-2-hexyl-1-tridecanol, 2-amino-2-heptyl- 1 -dodecanol, 2-amino-2-octyl- 1 -undecanol and mixtures thereof. Secondary amines alkanolamines likesuch as AMPD (2-amino-2-methyl-1,3-propanediol) dimer (CAS# 13782-62-21) as described for example in U.S. Patent No. 3,294,689; or tris (hydroxymethyl) aminomethane dimer (CAS #: 13782-59-7) described for example in U.S. Patent No. 3,294,689; U.S. Patent No. 2,408,096; and the Journal of the American Chemical Society (1944), 66, pp 879-81, and similar dimer derivatives from primary alkanolamines; and mixtures thereof.

Alkanolamines are polyfunctional molecules that combine the characteristics of amines and alcohols. Alkyl alkanolamines are characterized by the presence of a basic secondary or tertiary nitrogen atom and at least one hydroxyl group. Alkyl alkanolamines are capable of undergoing reactions typical of both alcohols and amines.

For example, the alkanolamines useful in the present invention may include alkyl alkanolamines such as ethenolamines. Because ethanolamines combine the properties of amines and alcohols, ethanolamines exhibit the unique capability of undergoing reactions common to both groups. As amines, ethanolamines are mildly alkaline and react with acids to form salts or soaps. As alcohols, ethanolamines are hygroscopic and can be esterified. Some examples of ethenolamines include monoethanolamine (MEA), diethanolamine (DEA), triethanolamine (TEA), and mixtures thereof. The chemical structures of the above ethanolamines are: MEA:H₂NCH₂CH₂OH; DEA:HN(CH₂CH₂OH)₂; and TEA: N(CH₂CH₂OH)₃.

Other examples of alkyl alkanolamines include N-methyldiethanolamine (MDEA) which is a tertiary amine; and N-methylethanolamine (NMEA) which is a secondary amine. The chemical structures of these alkyl alkanolamines are: MDEA: CH₃N (CH₂CH₂OH)₂; and NMEA:CH₃NHCH₂CH₂OH.

A preferred embodiment of the amine compound useful in the present invention may be THAM. THAM is an organic compound known as tris(hydroxymethyl)aminomethane, with the formula (HOCH₂)₃CNH₂. THAM is a primary amine and thus undergoes the reactions associated with typical amines. The chemical
structure of THAM is as follows:

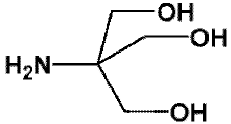

Another preferred embodiment of the amine compound useful in the present invention may comprise urea. Urea, also known as carbamide, is an organic compound with the chemical formula CO(NH₂)₂. The molecule has two -NH₂ groups joined by a carbonyl (C=O) functional group. The chemical structure of urea is as follows:

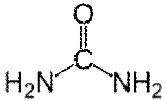

Another preferred embodiment of the amine compound useful in the present invention may include alkyl substituted urea with the following structure: 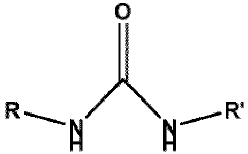 where R and R' can be H, or an alkyl having from 1 carbon to 20 carbon atoms such as for example CH₃, C₂H₅, C₃H₇, and the like.

The concentration of the amino compound used in preparing the amino compound-modified epoxy resin liquid (ACMERL) composition of the present invention may range generally from 1 weight percent (wt %) to 10 wt % in one embodiment, from 1 wt % to 8 wt % in another embodiment, from 1 wt % to 6 wt % in still another embodiment, and from 1 wt % to 5 wt % in yet another embodiment, based on the weight of the total components in the composition. Below these recommended ranges, the ability of the ACMERL composition to provide good surface tolerant and overcoat window in a fully formulated epoxy coating system would be diminished. Above these recommended ranges, the viscosity of the ACMERL composition would be too high for practical uses in epoxy liquid coatings or would result in resin gellation.

The composition of the present invention may include at least one epoxy compound as component (b) to form the ACMERL composition. For example, the epoxy compound useful in the present invention may include any conventional epoxy compound.

One embodiment of the epoxy compound used in the ACMERL composition of the present invention, may be for example a single epoxy compound used alone; or a combination of two or more epoxy compounds known in the art such as any of the epoxy compounds described in Lee, H. and Neville, K., Handbook of Epoxy Resins, McGraw-Hill Book Company, New York, 1967, Chapter 2, pages 2-1 to 2-27. In a preferred embodiment, the epoxy compound may include for example epoxy resins based on reaction products of polyfunctional alcohols, phenols, cycloaliphatic carboxylic acids, aromatic amines, or aminophenols with epichlorohydrin. A few non- limiting embodiments include, for example, bisphenol A diglycidyl ether, bisphenol F diglycidyl ether, resorcinol diglycidyl ether, and triglycidyl ethers of para-aminophenols. Other suitable epoxy resins known in the art include for example reaction products of epichlorohydrin with o-cresol novolacs, hydrocarbon novolacs, and, phenol novolacs. The epoxy compound may also be selected from commercially available epoxy resin products such as for example, D.E.R.331®, D.E.R.332, D.E.R. 354, D.E.R. 580, D.E.N.®425, D.E.N. 431, D.E.N. 438, D.E.R. 736, D.E.R. 742, or D.E.R. 732 epoxy resins available from The Dow Chemical Company. (D.E.R. and D.E.N. are trademarks of The Dow Chemical Company.)

Preferred embodiments of the epoxy resin useful in the present invention include for example cycloaliphatic epoxy resin or aliphatic epoxy resins. One preferred embodiment of the epoxy resin includes for example an epoxy resin referred to as 1,4-cyclohexanedimethanol diglycidylether (CHDM DGE); an epoxy resin referred to as Unoxol™ DGE; a hydrogenated bisphenol epoxy resin; an aromatic epoxy resin; and mixtures thereof.

Other preferred embodiments of the epoxy resin compound useful in the present invention may include for example a bisphenol A (BPA) epoxy resin; a bisphenol F epoxy resin; an epoxy novolac; and mixtures thereof.

Still other preferred embodiment of the epoxy resin compound useful in the present invention may include for example a liquid epoxy resin (LER) such as diglycidyl ether of bis-phenol A (BPA) epoxy resins, bis-phenol F (BPF) epoxy resins, catechol, resorcinol or hydroquinone, epoxy resins, divinylbenzene dioxide (DVBDO), other aromatic epoxy resins. Other suitable epoxy resins useful as component (b) are disclosed in, for example, U.S. Patent Nos. 3,018,262; 7,163,973; 6,887,574; 6,632,893; 6,242,083; 7,037,958; 6,572,971; 6,153,719; 8,048,819; 7,655,174; and 5,405,688; PCT Publication WO 2006/052727; and U.S. Patent Application Publication No. 2007/0221890 A1; and mixtures thereof.

The epoxide equivalent weight (EEW) of the epoxy resin compound may be less than 700 EEW in one embodiment, from 100 EEW to 600 EEW in another embodiment, from 130 EEW to 500 EEW in still another embodiment, and from 147 EEW to 450 EEW in yet another embodiment. Solvent addition could be used by those skilled in art of formulating liquid coatings for marine and protective coatings in order to provide good film formation.

Generally, the amount of epoxy compound used to prepare the ACMERL composition of the present invention, may be for example, from 85 wt % to 99.5 wt % in one embodiment, from 90 wt % to 99 wt % in another embodiment; and from 95 wt % to 98 wt % in still another embodiment, based on the total weight of the composition for preparing the ACMERL composition. Below these ranges, the ACMERL composition of the present invention could gel or would have a viscosity too high for practical applications in liquid coatings; and above these ranges, the ACMERL composition would not provide enough surface tolerant or improve the overcoat widow of the coating.

As an illustration of the present invention, the ACMERL composition may include for example a urea-modified cycloaliphatic epoxy resins such as CHDM DGE, Unoxol DGE, or other cycloaliphatic diglycidyl ethers with EEW less than 300 and urea content less than 15 wt %. The urea modified liquid epoxy resins can also be a blend of cycloaliphatic DGEs and aliphatic DGEs.

The urea-modified liquid epoxy resins can be from THAM directly advanced diglycidyl ether monomers or from urea advanced with the pre-advanced diglycidyl ether monomers with bis-phenols such as BPA, BPF, catechol, resorcinol or hydroquinone or their substituted derivatives; or mixtures thereof.

As another illustration of the present invention, the ACMERL composition may include for example a THAM-modified liquid epoxy resin of blended aromatic DGEs and aliphatic or cycloaliphatic DGEs.

The THAM-modified liquid epoxy resins can be from THAM directly advanced diglycidyl ether monomers or from THAM advanced with the pre-advanced diglycidyl ether monomers with bis-phenols such as BPA, BPF, catechol, resorcinol or hydroquinone, their substituted derivatives, or mixtures thereof.

Optional compounds that may be used to prepare the ACMERL composition of the present invention may include for example accelerators such as benzyl alcohol, adhesion promoters, salicylic acid, tris-2,4,6-dimethylaminomethyl phenol and mixtures thereof; a self-polymerizing inhibitor agent such as methyl p-toluenesulfonate (MPTS); fillers including for example finely divided minerals such as silica, alumina, zirconia, talc, sulfates, TiO₂, carbon black, graphite, silicates, and the like; other curing agents; other epoxy resins; reinforcing agents; rheology modifiers; surfactants; UV stabilizers; antioxidants; wetting agents; colorants including pigments, dyes, and tints; and mixtures thereof.

Generally, the amount of optional compounds or additives used in making the ACMERL composition of the present invention, may be for example, from 0 wt % to 80 wt % in one embodiment, from 0.01 wt % to 70 wt % in another embodiment; and from 40 wt % to 60 wt % in still another embodiment, based on the total weight of the cured composition used to make the modified epoxy compound.

The process for preparing the ACMERL composition of the present invention includes admixing (a) at least one amino compound such as THAM, and (b) at least one epoxy resin compound such as CHDM DGE. Other optional ingredients useful for preparing the ACMERL composition can be added to the above reaction mixture or formulation as needed. In one embodiment, the preparation of the ACMERL composition of the present invention is achieved by blending, in known mixing equipment, the epoxy compound and the amine compound, and optionally any other desirable additives. Any of the above-mentioned compounds may be added to the formulation used to make the ACMERL composition in any mixing order.

All the compounds of the ACMERL composition are typically mixed and dispersed at a temperature enabling the preparation of an effective adduct composition for a particular application such as for a coating composition. For example, the temperature during the mixing of all components used in making the ACMERL composition may be generally from 40 °C to 230 °C in one embodiment, and from 100 °C to 200 °C in another embodiment. In one embodiment, advantageously the conditions above can be modified so that the ACMERL composition can be made in a short amount of time and will not adversely affect the final product upon heating.

The preparation of the ACMERL composition of the present invention, and/or any of the steps thereof, may be a batch or a continuous process. The mixing equipment used in the process may be any vessel and ancillary equipment well known to those skilled in the art.

The ACMERL composition, before use in a curable composition, advantageously is a liquid at ambient conditions by itself or in solution in solvents typically used in liquid coating applications.

For example, a THAM-modified liquid epoxy resin and a urea-modified liquid epoxy resin have a viscosity of less than 1,000,000 mPa-s in one embodiment, from 500 mPa-s to 150,000 mPa-s in another embodiment, and from 5,000 mPa-s to 15,000 mPa-s in still another embodiment, as measured at ambient temperature which can be from -5 °C to 45 °C.

One embodiment of the present invention is directed to providing a curable coating resin formulation or composition including (a) at least one ACMERL composition such as an amine-modified epoxy resin compound or a urea-modified epoxy resin compound described above; and (b) at least one curing agent. Other optional additives known to the skilled artisan can be included in the curable composition such as for example a curing catalyst and other additives for various enduse applications.

The ACMERL composition useful as component (a) in preparing a curable coating composition of the present invention may include, for example, the amino-modified epoxy resin described above.

The concentration of the ACMERL composition used in the curable composition of the present invention as the epoxy resin may range generally from 50 wt % to 99 wt % in one embodiment, from 60 wt % to 90 wt % in another embodiment, and from 70 wt % to 80 wt % in still another embodiment, based on the weight of the curable composition.

Applicants have found that the ACMERL composition can cure by itself, i.e., alone and without a curing agent, self-polymerizing inhibitor agent or other additives. However, 100 wt % of the ACMERL composition alone would take too long to cure for practical purposes. Thus, a hardener is used in combination with the ACMERL composition to form a curable coating composition such that the curable composition cures in a reasonable and practical period of time.

Still, while the hardener addition would cure the curable composition in a reasonable time for practical purposes, the resultant cured product would not have the properties required for certain enduse applications such as for example maintenance and protective coatings. The addition of other resins, hardeners, solvents and additives used by those skilled in the art of formulating coating composition, used for example in maintenance and protective coatings applications, advantageously provide a good balance of properties for the intended applications. And, when the ACMERL composition content is less than 50 wt % of the curable coating composition, the capability of the resultant dry film or cure coating to enhance overcoat window and surface tolerant would be diminished.

In general, the curing agent, component (b), blended with the epoxy resin compound, component (a), to prepare the curable composition may comprise, for example, any conventional curing agent known in the art useful for including in a curable composition. The curing agent, (also referred to as a hardener or cross-linking agent) useful in the curable composition, may be selected, for example, but are not limited to, anhydrides, carboxylic acids, amine compounds, phenolic compounds, or mixtures thereof.

Examples of curing agents useful in the present invention may include any of the co-reactive or catalytic curing materials known to be useful for curing epoxy resin based compositions. Such co-reactive curing agents include, for example, polyamine, polyamide, polyaminoamide, dicyandiamide, polymeric thiol, polycarboxylic acid and anhydride, and any combination thereof or the like. Suitable catalytic curing agents include tertiary amine, quaternary ammonium halide, Lewis acids such as boron trifluoride, and any combination thereof or the like. Other specific examples of co-reactive curing agent include diaminodiphenylsulfone, styrene-maleic acid anhydride (SMA) copolymers; and any combination thereof. Among the conventional co-reactive epoxy curing agents, amines and amino or amido containing resins and phenolics are preferred.

Generally, the amount of hardener or curing agent used in the curable composition of the present invention will depend on the enduse of the curable composition. For example, as one illustrative embodiment, when the curable composition is used to prepare a coating, the concentration of curing agent can be generally from 1 wt % to 50 wt % in one embodiment, from 5 wt % to 40 wt % in another embodiment; from 10 wt % to 30 wt % in still another embodiment, and from 20 wt % to 30 wt % in still another embodiment. If the concentration of the curing agent is below 1 wt %, it would take too long to cure the epoxy resin; and if the concentration of the curing agent is above 50 wt % the performance balance of the resultant coating can be unacceptable or impractical.

In preparing the curable resin composition of the present invention, optional compounds can be added to the curable composition including for example compounds that are normally used in resin formulations known to those skilled in the art for preparing curable compositions and thermosets. For example, the optional components may comprise compounds that can be added to the composition to enhance application properties (for example, surface tension modifiers or flow aids), reliability properties (for example, adhesion promoters) the reaction rate, the selectivity of the reaction, and/or the catalyst lifetime.

Other optional compounds that may be added to the curable composition of the present invention may include, for example, a catalyst to facilitate the reaction between the epoxy compound and the curing agent used, a solvent to lower the viscosity of the formulation further, other resins such as a phenolic resin that can be blended with the epoxy resin of the formulation, other epoxy resins different from the epoxy compound of the present invention (for example, aromatic and aliphatic glycidyl ethers; cycloaliphatic epoxy resins; and divinylarene dioxides such as divinylbenzene dioxide), other curing agents, fillers, pigments, toughening agents, flow modifiers, adhesion promoters, diluents, stabilizers, plasticizers, catalyst de-activators, flame retardants, and mixtures thereof.

Generally, the amount of one or more optional components, when used in the present invention, may be for example, from 0 wt % to 40 wt % in one embodiment, from 0.01 wt % to 35 wt % in another embodiment; from 0.1 wt % to 30 wt % in still another embodiment; and from 0.15 wt % to 20 wt % in yet another embodiment.

The process for preparing the curable composition of the present invention includes admixing (a) at least one ACMERL composition; (b) at least one curing agent; and (c) optionally, any other optional compound such as at least one cure catalyst or other optional ingredients as needed. For example, the preparation of the curable resin formulation of the present invention is achieved by blending, in known mixing equipment, the ACMERL composition, the curing agent, and optionally any other desirable additives. Any of the above-mentioned optional additives, for example a curing catalyst, may be added to the composition during the mixing or prior to the mixing to form the composition.

All the compounds of the curable formulation are typically mixed and dispersed at a temperature enabling the preparation of an effective curable epoxy resin composition having the desired balance of properties for a particular application. For example, the temperature during the mixing of all components may be generally from 5 °C to 40 °C in one embodiment, and from 15 °C to 30 °C in another embodiment. Lower mixing temperatures help to minimize reaction of the epoxide and hardener in the composition to maximize the pot life of the composition.

The preparation of the curable formulation of the present invention, and/or any of the steps thereof, may be a batch or a continuous process. The mixing equipment used in the process may be any vessel and ancillary equipment well known to those skilled in the art.

The ACMERL composition used in the curable composition advantageously imparts improved properties to the curable composition such as for example, surface tolerant and overcoat window.

Generally, the curable composition of the present invention can have a viscosity of from 50 mPa-s to 50,000 mPa-s in one embodiment, from 50 mPa-s to 25,000 mPa-s in another embodiment, from 50 mPa-s to 10,000 mPa-s in still another embodiment, and from 50 mPa-s to 5,000 mPa-s in yet another embodiment.

The process of the present invention includes curing the curable resin composition to form a thermoset or cured composition such as a film coating on a substrate.

The process of curing of the curable composition may be carried out at a predetermined temperature and for a predetermined period of time sufficient to cure the composition. The curing process may be dependent on the hardeners used in the formulation. For example, the temperature of curing the formulation may be generally from - 5 °C to 200 °C in one embodiment; from 5 °C to 190 °C in another embodiment; from 10 °C to 175 °C in still another embodiment; from 10 °C to 100 °C in yet another embodiment; from 10 °C to 60 °C in even still another embodiment; and from 10 °C to 40 °C in even yet another embodiment.

Generally, the Set to Touch Time as defined by ASTM D5895 may be chosen between 1 minute to 4 hours in one embodiment, between 5 minutes to 2 hours in another embodiment, and between 10 minutes to 1.5 hours in still another embodiment. Below a period of time of 1 minute, the time may be too short to ensure sufficient reaction under conventional processing conditions; and above 4 hours, the time may be too long to be practical or economical.

In addition, the cured coating product of the present invention advantageously may have a surface tolerant as measured by the percentage of coating removed from the metal substrate generally from 0 percent (%) to 65 % in one embodiment, from 0 % to 35 % in another embodiment, and from 0 % to 15 % and in still another embodiment from 0 % to 5 %, as measured by ASTM Test Method D 3359, ISO 2409, Method B & DIN Standard No. 53151.

In addition, the cured coating product of the present invention advantageously may have an overcoat window or overcoatability as measured by the percentage of coating removed from the coated substrate generally from 0 % to 65 % in one embodiment, from 0 to 35 % in another embodiment, and from 0 to 15 % and in still another embodiment from 0 % to 5 % as measured by ASTM Test Method D 3359, ISO 2409, Method B & DIN Standard No. 53151.

For example, it has been unexpectedly found that by using a tris-amino-modified liquid epoxy resin the surface tolerant of a coating can be improved as measured by cross-hatch adhesion results after 3 weeks Cleveland Humidity exposure test.

In another example, it has been found that a urea-modified cyclohexanedimethanol diglycidyl ether exhibits a very good surface tolerance property as measured by the Pull-Off Adhesion Test (ASTM D4541) compared to a conventional amine epoxy resin such as DER671X75 an epoxy resin compound commercially available from The Dow Chemical Company.

The curable composition of the present invention may be used to manufacture a cured thermoset product that may be used in various coating applications. For example, the curable composition may be used in coating applications used in Maintenance and Protective Coatings such as, but not limited to, coatings for aircraft, appliances, architectural, automotive, automotive refinish, bridge, can, coil, concrete, electronic, fire retardant, general metal, industrial maintenance, insulation, intumescent, machinery and equipment, marine, metal containers, metal furniture, other land transportation (for example rail cars, agricultural and construction equipment), pipe, rebar, tank, traffic paint, and transformers; coatings for off-shore and wind mill structures; and the like applications.

### EXAMPLES

The following examples and comparative examples further illustrate the present invention in detail but are not to be construed to limit the scope thereof.

Various terms and designations used in the following examples are explained herein below:
"THAM" stands for tris(hydroxymethyl)aminomethane.
"CHDM DGE" stands for cyclohexane dimethanol diglycidyl ether.
"A1 catalyst" is an ethyltriphenylphosphonium acetate in methanol (70 wt %) catalyst available from The Dow Chemical Company.
"FTIR" stands for Fourier transform infrared spectroscopy.
"EEW" stands for epoxy equivalent weight.
"BPA" stands for bisphenol A.
"MPTS" stands for methyl p-toluenesulfonate and available from Aldrich.
"DER 383" is an epoxy resin having an EEW of 176-183 and available from The Dow Chemical Company.
"DER671" is a solid epoxy resin available from The Dow Chemical Company.
"DER671X75" is DERX671 dissolved in xylene with 75 wt % solid content available from The Dow Chemical Company.

### Example 1 - Synthesis of THAM-Modified Resorcinol Advanced CHDM DGE

A THAM-modified resorcinol advanced CHDM DGE resin was synthesized by first advancing CHDM DGE with resorcinol followed by THAM modification in a 500 mL three-neck flask glass reactor connected to a mechanical stirrer, a water-cooled condenser, and a thermocouple attached to a temperature controller. Then, 188.01 g of crude CHDM DGE was loaded into the glass reactor at room temperature (about 25 °C). Under nitrogen bubbling, the crude CHDM DGE was dried at 120 °C for 2 hours (hr). At 120 °C, 18.54 g of resorcinol was added into the reactor with agitation and the mixture was stirred until the resorcinol dissolved. Then, 450 ppm of A1 catalyst (0.1328 g) based on total weight of the mixture was added via a syringe. The resultant mixture was heated to 150 °C. The exothermic peak was climbed to 164 °C after adding catalyst about 10 minutes (min). After the temperature went done to 150 °C, THAM was added to the mixture. The temperature was held at 150 °C until reaching a target EEW. The above synthesis took 3 hr and 40 min. The final EEW of the resulting advanced resin product was 229 and the % epoxy of the advanced resin product was 18.78. The yield of the advanced resin product was above 99 %. The properties of the advanced resin product are shown in Table 1.

### Comparative Example A - Synthesis of Resorcinol Advanced CHDM DGE

A 500 mL three-neck flask glass reactor as described in Example 1 was used in this example. Crude CHDM DGE, 186.64 g, was loaded into the glass reactor at room temperature. Under nitrogen bubbling, the crude CHDM DGE was dried at 120 °C for 2 hr. At 120 °C, 20.5 g of resorcinol was added into the glass reactor with agitation and the mixture was stirred until the resorcinol dissolved. Then, 450 ppm of A1 catalyst (0.1332 g) based on the total weight of the mixture was added via a syringe. The mixture then was heated to 150 °C. No obvious exotherm was observed. The temperature was held at 150 °C until reaching a target EEW. The above synthesis took 40 min. The final EEW of the resultant advanced resin product was 232 and the % epoxy of the advanced resin product was 18.51. The yield of the advanced resin product was above 99 %. The properties of the advanced resin product are shown in Table 1.

### Example 2 - Synthesis of Urea-Modified CHDM DGE

A 500 mL three-neck glass flask reactor as described in Example 1 was used. Crude CHDM DGE, 169.97 g, was loaded into the glass reactor at room temperature. Under nitrogen bubbling, the crude CHDM DGE was dried at 120 °C for 2 hr. At 120 °C, 8.0 g of urea was added into the reactor with agitation (400 rpm). After adding 0.1144 g of A1 catalyst, the reaction mixture was heated to 150 °C. After the solid urea disappeared and the reaction mixture formed a clear solution, the agitation was sped up to a higher speed (800 rpm). FTIR was used to monitor the reaction until the peak of -NH₂ in the urea disappeared to form the peak of -CH₂-NHCONH-CH₂-. The reaction was then stopped, and 0.05 g of MPTS was added to the reaction mixture and the mixture was mixed further. The final EEW of the resultant advanced resin product was 250 and the % epoxy of the advanced resin product was 17.15. The yield of the advanced resin product was above 98 %. The properties of the advanced resin product are shown in Table 1.

### Example 3 - Synthesis of THAM-Modified BPA Advanced PER 383

This resin was prepared by advancing DER 383 with BPA followed by the addition of THAM in a 2 L three-neck flask reactor connected to a mechanical stirrer, a water-cooled condenser, and a thermocouple attached to a temperature controller. DER 383, 761 g, was loaded into the glass reactor at ambient conditions under nitrogen pad. The DER 383 was dried with dry bubbling nitrogen, at 120 °C for 1 hr at 120 °C. Then, 227.9 g of BPA were added into the reactor under agitation. The mixture was stirred until the BPA dissolved. Then, 0.5 g of A1 catalyst using a syringe was added to the mixture. The resultant mixture was heated to 140 °C. The exothermic peak of the mixture reached 200 °C after the A1 catalyst addition. After the temperature went down to 180 °C, THAM was added to the mixture under agitation. The resultant resin was kept in the reactor under agitation for half an hour at 180 °C. The final EEW of resultant advanced resin product was 481. The advanced resin product was cool down to 80 °C and diluted with xylene until the advanced resin product reached 25 % by weight of the total blend. The final viscosity of advanced resin product in solution at 25 °C was 21,725 mPa-s as measured by the procedure described in ASTM D445.

### Comparative Example B - Synthesis of BPA Advanced DER 383

The resin product in this example was prepared by advancing DER 383 with BPA in a 2 L three-neck flask reactor connected to a mechanical stirrer, a water-cooled condenser, and a thermocouple attached to a temperature controller. DER 383, 751.6 g, was loaded into the glass reactor at ambient conditions under nitrogen pad. The DER 383 was dried with dry bubbling nitrogen, at 120 °C for 1 hr at 120 °C; and then 247.9 g of BPA were added into the reactor under agitation. The mixture was stirred until the BPA dissolved. Then, 0.5 g of A1 catalyst was added to the mixture using a syringe. The resultant mixture was heated to 140 °C. The exothermic peak reached 200 °C after the A1 catalyst addition. The resin was kept in the reactor under agitation for half an hour at 180 °C. The final EEW of the resulting advanced resin product was 507. The advanced resin product was cool down to 80 °C and diluted with xylene until the advanced resin product reached 25 % by weight. The final viscosity of the advanced resin product in solution at 25 °C was 19194 mPa-s as measured by ASTM D445.

### Comparative Example C - Use of DER671X75

The composition of Comparative Example B was made using DER671 dissolved in xylene with 75 wt % solids. Table 1 shows the properties of the prepared composition of DER671X75.

**Table 1 - Properties of Resin Products**

| Example | Part A. Epoxy Resin Composition | Resin Viscosity (mPa-s at 23 °C) | Part A EEW |
|---|---|---|---|
| Example 1 | Crude CHDM DGE/ Resorcinol/THAM (1 wt %) | 8,651 | 229.0 |
| Comparative Example A | Crude CHDM DGE/Resorcinol | 7,927 | 232.0 |
| Example 2 | Crude CHDM DGE/Urea (4.5 wt %) | 399,607 | 250.8 |
| Example 3 | 75 %-THAM Modified BPA Advanced DER 383 in Xylene | 21,725 | 481 |
| Comparative Example B | 75% BPA Advanced DER 383 in Xylene | 19,194 | 507 |
| Comparative Example C | DER 671X75 | 19,252 | 639 |

### Examples 4 and 5 and Comparative Examples D and E - Preparation of Coating Formulations

The resins prepared in Example 1, Example 2, Comparative Example A and Comparative Example B were formulated into a clear coating composition with PolypoxH488L hardener (modified cycloaliphatic amines) using a 1:1 stoichiometric ratio of epoxy:hardener. All the formulations were mixed with a high speed mixer at 30 seconds and 3500 revolutions per minute (rpm). Table 2 shows the recipes of the coating formulations.

**Table 2 - Coating Formulations and Viscosities**

| Example | Resin Product | Part A. Epoxy Resin Composition | Part A (g) | Part B. Hardener | Part B (g) | Xylene (g) | Formulation Viscosity (DVIII+. mPa-s at 23°C |
|---|---|---|---|---|---|---|---|
| Example 4 | Resin from Example 1 | Crude CHDM DGE/ Resorcinol/THAM (1 wt %) | 35.000 | PolypoxH488L | 11.371 | 5.152 | 229.0 |
| Comparative Example D | Resin from Comparative Example A | Crude CHDM DGE/Resorcinol | 35.000 | PolypoxH488L | 11.224 | 5.136 | 232.0 |
| Example 5 | Resin from Example 2 | Crude CHDM DGE/Urea (4.5 wt %) | 35.000 | PolypoxH488L | 10.383 | 11.346 | 250.8 |
| Comparative Example E | Resin from Comparative Example C | DER 671X75 | 35.000 | PolypoxH488L | 4.075 | 9.769 | 639 |

### Example 6 and Comparative Example F - Preparation of Coating Formulations

For surface tolerant evaluation and cross-hatch adhesion properties, results were compared using a clear coating based on the resin from Example 3 (Example 6) and a clear coating based on the resin from Comparative Example B (Comparative Example F) described in Table 3. The formulations in Table 3 were applied onto rusty metal panels prepared according to SSPC-ME-1 with a 8-mil gap draw down bar and allowed to cure at controlled temperature room (CTR) (50 % relative humidity [RH] and 25 °C) for 7 days. After 7 days curing, the coated panels were put into water bath for immersion 3 weeks then followed with cross-hatch adhesion test. Another group of panels were put into Cleveland Humidity chamber for exposure 3 weeks and followed with cross hatch adhesion test. Both test results in Table 3 showed better adhesion with Comparative Example B than Example 3, which means Comparative Example B has better surface tolerant property than control, Example 3.

**Table 3 - Cross-Hatch Adhesion Results for Surface Tolerant Evaluation**

| Part A Epoxy | Example 6 (g) | Comparative Example F (g) |
|---|---|---|
| Resin Product from Example 3 | 47.87 | |
| Resin Product from Comparative Example B | | 47.87 |
| Xylene | 14.36 | 14.36 |
| n-Butanol | 14.36 | 14.36 |
| Part B Hardener | | |
| Versamid 115X70 | 23.41 | 20.24 |
| Testing Procedure | Based on Example 3 | Based on Comparative Example B |
| Cross-hatch adhesion results after 3 weeks Cleveland Humidity exposure | 5B | 0B |
| Cross-hatch adhesion results after 3 weeks water immersion | 5B | 1B |

Coatings prepared with from the formulations described in Table 3 were also evaluated for overcoat window study. Clear coatings from Example 6 (based on Example 3) and Comparative Example F (based on comparative Example B) were applied onto blasted steel panels with a 10-mil gap draw down bar and allowed to cure overnight at room temperature. Panels were then placed horizontally outside to weather for a period from 1 day to 56 days. After each panel had been exposed external weather conditions during set time period, the panels were overcoated with the original clear coat, using 10-mil gap draw down bar. The second coating was allowed to cure at CTR (50 % RH and 25 °C) for 7 days, after which the panels were immersed in water at 43 °C for a further 7 days. Following this immersion period, panels were wiped dry and subjected to the crosshatch adhesion test. The cross hatch adhesion test results are shown in Table 4.

**Table 4 - Cross-Hatch Adhesion Results for Overcoat Window Evaluation:**

| | Example 6 | Comparative Example F |
|---|---|---|
| Exposure Time (Day) | Based on Example 3 | Based on Comparative Example B |
| 1 | 5B | 0B (CF) |
| 3 | 5B | 0B (CF) |
| 8 | 5B | 2B (AF, CF) |
| 13 | 5B | 0B (AF, CF) |
| 56 | 0B (AF) | 0B (AF) |

The results as described in Table 4 above clearly show the superior overcoat ability performance properties of the clear coatings from Example 6 (based on Example 3 or THAM-Modified BPA Advanced DER 383) versus comparative Example F (based on comparative Example B or unmodified BPA Advanced DER 383) (

### Curing of Coating Formulations

A coating formulation was applied to metal panels according to ASTM D4147-99(2007).

For overcoatability evaluation, phosphate treated steel panels (Q-panel) were used. For the surface tolerance evaluation, Q-panels (R-46) were used but rusted in a Q-fog chamber for 3 weeks according to the method described in SSPC-ME 1.

A 6 mils drawdown bar was used to drawdown the coating films except for the D.E.R.™ 671X75 formulation a 10 mils bar was used.

For overcoatability evaluation, the first coat was cured exterior ambient. The second coat was applied after the first coat exterior curing for 1 day, 3 day, 7 days, 14 days, and 28 days. The second coat was cured for 10 days in a control room (at 25 °C and 50 % RH) before subjecting the coating to a cross-hatch adhesion test.

For surface tolerance evaluation, the coated panels were cured at ambient temperature and humidity for 7 days. The coated panels were then cured at 60 °C overnight to ensure full cure of the coating had been obtained.

The room temperature (23 °C) viscosities of the coating formulations were measured using a Brookfield HADVIII+ Viscometer. A 9 g sample was loaded into a small sample adapt, and a spindle (31 or 34 depends on materials viscosity) was placed, and the spindle agitation rpm was adjusted to 25-35 % torque range. The equipment collected viscosity data automatically after 2 min stabilization of running. The viscosity measurements were reported in units of mPa-s at 23 °C.

### Example 7 and Comparative Example G

### Coating Performance Evaluation

### Overcoatability

The overcoatability of coating formulations incorporating the resin of Example 1 and the resin of Comparative Example A was evaluated with Cross Hatch Adhesion Test of both 10 days control room dried coatings (two coats) and the coatings with further additional 1 week water immersion. Adhesion of the coatings on metal substrates was measured according to ASTM D3359-09 and by visual observation of the failure model. The reading scale is as follows.

| | |
|---|---|
| 5B | No peeling or removal % of coating area removed: 0 % |
| 4B | Trace peeling or removal along incisions or at their intersection. % of coating area removed: Less than 5 % |
| 3B | Jagged removal along incision up to 1.6 mm on either side % of coating area removed: 5 - 15 % |
| 2B | Jagged removal along most of incisions up to 3.2 mm on either side % of coating area removed: 15 - 35 % |
| 1B | Removal from most of the area of the X under the tape % of coating area removed: 35 - 65 % |
| 0B | Removal beyond the area of the X % of coating area removed: Greater than 65 % |

The failure model included the failure from substrate or adhesive failure (AF); the failure between two coats cohesive failure (CF), and both failures from substrate and between two coats (AF, CF).

Table 5 describes the overcoatability results of a THAM-modified resorcinol advanced CHDM DGE resin (resin from Example 1) compared to a non-THAM-modified resin (resin from Comparative Example A).

**Table 5 - Overcoatability Properties**

| | | | The First Coat for 1-Day Exterior Exposure; Recoat for 10 days in Control Room | |
|---|---|---|---|---|
| Example | Resin Product | Part A. Epoxv Resin Composition | Recoat Adhesion (1-5B) Initial (10-Day R.T. Cure) | Recoat Adhesion (1-5B) Further Water Immersed (7-Day) |
| Example 7 | Resin from Example 1 | Crude CHDM DGE/Resorcinol/THAM (1 wt %) | 5B | 3B (AF) |
| Comparative Example G | Resin from Comparative Example A | Crude CHDM DGE/Resorcinol | 5B | 3B (AF) |

| | | | The First Coat for 3-Day Exterior Exposure; Recoat for 10 days in Control Room | |
|---|---|---|---|---|
| Example | Resin Product | Part A. Epoxy Resin Composition | Recoat Adhesion (1-5B) Initial (10-Day R.T. Cure) | Recoat Adhesion (1-5B) Further Water Immersed (7-Day) |
| Example 7 | Resin from Example 1 | Crude CHDM DGE/Resorcinol/THAM (1 wt %) | 5B | 3B (AF) |
| Comparative Example G | Resin from Comparative Example A | Crude CHDM DGE/Resorcinol | 5B | 2B (AF) |

| | | | The First Coat for 7-Day Exterior Exposure; Recoat for 10 days in Control Room | |
|---|---|---|---|---|
| Example | Resin Product | Part A. Epoxy Resin Composition | Recoat Adhesion (1-5B) Initial (10-Day R.T. Cure) | Recoat Adhesion (1-5B) Further Water Immersed (7-Day) |
| Example 7 | Resin from Example 1 | Crude CHDM DGE/Resorcinol/THAM (1 wt %) | 5B | 4B (AF) |
| Comparative Example G | Resin from Comparative Example A | Crude CHDM DGE/Resorcinol | 5B | 1B (AF) |

| | | | The First Coat for 14-Day Exterior Exposure; Recoat for 10 days in Control Room | |
|---|---|---|---|---|
| Example | Resin Product | Part A. Epoxy Resin Composition | Recoat Adhesion (1-5B) Initial (10-Day R.T. Cure) | Recoat Adhesion (1-5B) Further Water Immersed (7-Day) |
| Example 7 | Resin from Example 1 | Crude CHDM DGE/Resorcinol/THAM (1 wt %) | 5B | 4B (AF) |
| Comparative Example G | Resin from Comparative Example A | Crude CHDM DGE/Resorcinol | 4B (CF) | 1B (AF) |

| | | | The First Coat for 28-Day Exterior Exposure; Recoat for 10 days in Control Room | |
|---|---|---|---|---|
| Example | Resin Product | Part A. Epoxy Resin Composition | Recoat Adhesion (1-5B) Initial (10-Day R.T. Cure) | Recoat Adhesion (1-5B) Further Water Immersed (7-Day) |
| Example 7 | Resin from Example 1 | Crude CHDM DGE/Resorcinol/THAM (1 wt %) | 5B | 4B (AF) |
| Comparative Example G | Resin from Comparative Example A | Crude CHDM DGE/Resorcinol | 3B (CF) | 1B (AF) |

### Examples 8 and 9 and Comparative Examples H and I

### Surface Tolerance

The surface tolerance of coating formulation incorporating the resin of Example 1, the resin of Example 2, the resin of Comparative Example A, and the resin of Comparative Example B was evaluated using a Positest Pull-Off Adhesion test with a Positest AT Adhesion Tester. The Positest AT Adhesion Tester equipment measures the force required to pull a specified test diameter of coating away from a substrate using hydraulic pressure. The pressure is automatically read and displayed as "mPa" which represents the coating's strength of adhesion to the substrate. The test is performed according to ASTM D4541 and ISO4624.

The Positest Pull-Off Adhesion Tester evaluates the adhesion (pull-off strength) of a coating by determining the greatest tensile pull off force that it can bear before detaching. Break points demonstrated by fractured surfaces, occur along the weakest plane within the system consisting of the dolly, adhesive, coating layers and substrate. The Epoxy-Patch adhesive (Part#1373425 available from Loctite) was used for adhesion of a dolly and a coating layer after the coatings on dusty panels were fully cured. The adhesive was cured for 3 days in ambient conditions (23 °C, 50-70 % humidity) before the test was administered. Table 6 shows the results of the testing. The higher strength means the better adhesion of coating to a substrate.

The failure model included the failure between coating and substrate (AF); the failure between coating and adhesive (CF), and the failure between the dolly and the adhesive (CF1).

**Table 6 - Surface Tolerance Properties**

| | Example 8 | Comparative Example H | Example 9 | Comparative Example I |
|---|---|---|---|---|
| Property | Resin from Example 1 | Resin from Comparative Example A | Resin from Example 2 | Resin from Comparative Example B |
| Pull of Strength | 2.73 | 2.48 | 2.74 | 2.37 |
| Failure Model | CF | CF, AF | CF | AF |

## Claims

1. An amino compound-modified epoxy resin liquid composition comprising a reaction product of:
(a) at least one amino compound, wherein the amino compound comprises (a1) tris(hydroxymethyl)aminomethane, in a concentration of from 1 weight percent to 3 weight percent based on the weight of the total components in the composition, or (a2) at least one urea compound, in a concentration of from 1 weight percent to 10 weight percent based on the weight of the total components in the composition; and
(b) at least one liquid epoxy resin compound having a viscosity of from 8 mPa·s to 500,000 mPa·s;
wherein the amino compound-modified epoxy resin liquid composition has a viscosity of less than 1,000,000 mPa·s as measured at a temperature of from -5°C to 45°C; the composition further comprising a phenolic compound, where viscosity is measured according to the method given in the present specification.

2. The amino compound-modified epoxy resin liquid composition of claim 1, wherein the phenolic compound comprises a benzenediol.

3. The amino compound-modified epoxy resin liquid composition of claim 1, wherein the at least one amino compound comprises tris(hydroxymethyl)aminomethane.

4. The amino compound-modified epoxy resin liquid composition of claim 1, wherein the at least one amino compound comprises at least one urea compound.

5. The amino compound-modified epoxy resin liquid composition of claim 4, comprising further a self-polymerizing inhibitor agent.

6. The amino compound-modified epoxy resin liquid composition of claim 5, wherein the concentration of the self-polymerizing inhibitor agent comprises from 0.001 weight percent to 0.5 weight percent.

7. The amino compound-modified epoxy resin liquid composition of claim 1, wherein the at least one liquid epoxy resin compound is present in a concentration of from 85 weight % to 99.5 weight % based on the weight of the total components in the composition.

8. A process for preparing an amino compound-modified epoxy resin liquid composition including reacting:
(a) at least one amino compound, wherein the amino compound comprises (a1) tris(hydroxymethyl)aminomethane, in a concentration of from 1 weight percent to 3 weight percent based on the weight of the total components in the composition, or (a2) at least one urea compound, in a concentration of from 1 weight percent to 10 weight percent based on the weight of the total components in the composition; and
(b) at least one liquid epoxy resin compound having a viscosity of from 8 mPa·s to 500,000 mPa·s;
wherein the amino compound-modified epoxy resin liquid composition has a viscosity of less than 1,000,000 mPa·s as measured at a temperature of from -5°C to 45°C; the composition further comprising a phenolic compound, where viscosity is measured according to the method given in the present specification.

9. The process for preparing an amino compound-modified epoxy resin liquid composition of claim 8 including further (c) a self-polymerizing inhibitor agent.

10. The process for preparing an amino compound-modified epoxy resin liquid composition of claim 8, wherein the at least one liquid epoxy resin compound is present in a concentration of from 85 weight % to 99.5 weight % based on the weight of the total components in the composition.

11. A curable coating composition comprising:
(A) at least one amino compound-modified epoxy resin liquid composition of claim 1; and
(B) at least one curing agent.

12. A process for preparing a curable composition comprising admixing:
(A) at least one amino compound-modified epoxy resin liquid composition of claim 1; and
(B) at least one curing agent.

13. A cured thermoset coating prepared using the composition of claim 1 or claim 11.

## Patentansprüche

1. Mit einer Aminoverbindung modifizierte flüssige Epoxidharz-Zusammensetzung, umfassend ein Reaktionsprodukt von
(a) wenigstens einer Aminoverbindung, wobei die Aminoverbindung (a1) Tris(hydroxymethyl)aminomethan in einer Konzentration von 1 Gew.-% bis 3 Gew.-%, bezogen auf das Gewicht der gesamten Komponenten in der Zusammensetzung, oder (a2) wenigstens eine Harnstoffverbindung in einer Konzentration von 1 Gew.-% bis 10 Gew.-%, bezogen auf das Gewicht der gesamten Komponenten in der Zusammensetzung, und
(b) wenigstens eine flüssige Epoxidharzverbindung mit einer Viskosität von 8 mPa·s bis 500.000 mPa·s umfasst,
wobei die mit einer Aminoverbindung modifizierte flüssige Epoxidharz-Zusammensetzung eine Viskosität von weniger als 1.000.000 mPa·s, gemessen bei einer Temperatur von -5 °C bis 45 °C, aufweist, wobei die Zusammensetzung weiter eine Phenolverbindung umfasst, wobei die Viskosität nach dem Verfahren gemessen wird, das in der vorliegenden Beschreibung angegeben ist.

2. Mit einer Aminoverbindung modifizierte flüssige Epoxidharz-Zusammensetzung nach Anspruch 1, wobei die Phenolverbindung ein Benzoldiol umfasst.

3. Mit einer Aminoverbindung modifizierte flüssige Epoxidharz-Zusammensetzung nach Anspruch 1, wobei die wenigstens eine Aminoverbindung Tris(hydroxymethyl)aminomethan umfasst.

4. Mit einer Aminoverbindung modifizierte flüssige Epoxidharz-Zusammensetzung nach Anspruch 1, wobei die wenigstens eine Aminoverbindung wenigstens eine Harnstoffverbindung umfasst.

5. Mit einer Aminoverbindung modifizierte flüssige Epoxidharz-Zusammensetzung nach Anspruch 4, weiter ein selbstpolymerisierendes Inhibitormittel umfassend.

6. Mit einer Aminoverbindung modifizierte flüssige Epoxidharz-Zusammensetzung nach Anspruch 5, wobei die Konzentration des selbstpolymerisierenden Inhibitormittels 0,001 Gew.-% bis 0,5 Gew.-% beträgt.

7. Mit einer Aminoverbindung modifizierte flüssige Epoxidharz-Zusammensetzung nach Anspruch 1, wobei die wenigstens eine flüssige Epoxidharzverbindung in einer Konzentration von 85 Gew.-% bis 99,5 Gew.-%, bezogen auf das Gewicht der gesamten Komponenten in der Zusammensetzung, vorhanden ist.

8. Verfahren zur Herstellung einer mit einer Aminoverbindung modifizierten flüssigen Epoxidharz-Zusammensetzung, umfassend das Umsetzen
(a) wenigstens einer Aminoverbindung, wobei die Aminoverbindung (a1) Tris(hydroxymethyl)aminomethan in einer Konzentration von 1 Gew.-% bis 3 Gew.-%, bezogen auf das Gewicht der gesamten Komponenten in der Zusammensetzung, oder (a2) wenigstens einer Harnstoffverbindung in einer Konzentration von 1 Gew.-% bis 10 Gew.-%, bezogen auf das Gewicht der gesamten Komponenten in der Zusammensetzung, und
b) wenigstens einer flüssigen Epoxidharzverbindung mit einer Viskosität von 8 mPa·s bis 500.000 mPa·s,
wobei die mit einer Aminoverbindung modifizierte flüssige Epoxidharz-Zusammensetzung eine Viskosität von weniger als 1.000.000 mPa·s, gemessen bei einer Temperatur von -5 °C bis 45 °C, aufweist, wobei die Zusammensetzung weiter eine Phenolverbindung umfasst, wobei die Viskosität nach dem Verfahren gemessen wird, das in der vorliegenden Beschreibung angegeben ist.

9. Verfahren zur Herstellung einer mit einer Aminoverbindung modifizierten flüssigen Epoxidharz-Zusammensetzung nach Anspruch 8, die weiter (c) ein selbstpolymerisierendes Inhibitormittel enthält.

10. Verfahren zur Herstellung einer mit einer Aminoverbindung modifizierten flüssigen Epoxidharz-Zusammensetzung nach Anspruch 8, wobei die wenigstens eine flüssige Epoxidharzverbindung in einem Konzentration von 85 Gew.-% bis 99,5 Gew.-%, bezogen auf das Gewicht der gesamten Komponenten in der Zusammensetzung, vorhanden ist.

11. Härtbare Beschichtungszusammensetzung, umfassend
(A) wenigstens eine mit einer Aminoverbindung modifizierte flüssige Epoxidharz-Zusammensetzung nach Anspruch 1 und
(B) wenigstens einen Härter.

12. Verfahren zur Herstellung einer härtbaren Zusammensetzung, umfassend das Mischen
(A) wenigstens einer mit einer Aminoverbindung modifizierten flüssigen Epoxidharz-Zusammensetzung nach Anspruch 1 und
(B) wenigstens eines Härters.

13. Gehärtete Duroplast-Beschichtung, hergestellt unter Verwendung der Zusammensetzung nach Anspruch 1 oder Anspruch 11.

## Revendications

1. Composition liquide de résine époxy modifiée par un composé aminé comprenant un produit de réaction de :
(a) au moins un composé aminé, ledit composé aminé comprenant (a1) du tris(hydroxyméthyl)aminométhane, dans une concentration de 1 pour cent en poids à 3 pour cent en poids sur la base du poids des composants totaux de la composition, ou (a2) au moins un composé d'urée, dans une concentration de 1 pour cent en poids à 10 pour cent en poids sur la base du poids des composants totaux dans la composition ; et
(b) au moins un composé de résine époxy liquide présentant une viscosité de 8 mPa•s à 500 000 mPa•s ;
ladite composition liquide de résine époxy modifiée par un composé aminé présentant une viscosité inférieure à 1 000 000 mPa•s telle que mesurée à une température de -5°C à 45°C ; ladite composition comprenant en outre un composé phénolique, où la viscosité est mesurée selon le procédé indiqué dans la présente description.

2. Composition liquide de résine époxy modifiée par un composé aminé selon la revendication 1, ledit composé phénolique comprenant un benzènediol.

3. Composition liquide de résine époxy modifiée par un composé aminé selon la revendication 1, ledit au moins un composé aminé comprenant du tris(hydroxyméthyl)aminométhane.

4. Composition liquide de résine époxy modifiée par un composé aminé selon la revendication 1, ledit au moins un composé aminé comprenant au moins un composé d'urée.

5. Composition liquide de résine époxy modifiée par un composé aminé selon la revendication 4, comprenant en outre un agent inhibiteur auto-polymérisant.

6. Composition liquide de résine époxy modifiée par un composé aminé selon la revendication 5, ladite concentration de l'agent inhibiteur auto-polymérisant constituant de 0,001 % en poids à 0,5 % en poids.

7. Composition liquide de résine époxy modifiée par un composé aminé selon la revendication 1, ledit au moins un composé de résine époxy liquide étant présent dans une concentration de 85 % en poids à 99,5 % en poids sur la base du poids des composants totaux de la composition.

8. Procédé de préparation d'une composition liquide de résine époxy modifiée par un composé aminé comprenant la réaction de :
(a) au moins un composé aminé, ledit composé aminé comprenant (a1) du tris(hydroxyméthyl)aminométhane, dans une concentration de 1 pour cent en poids à 3 pour cent en poids sur la base du poids des composants totaux de la composition, ou (a2) au moins un composé d'urée, dans une concentration de 1 pour cent en poids à 10 pour cent en poids sur la base du poids des composants totaux dans la composition ; et
(b) au moins un composé de résine époxy liquide présentant une viscosité de 8 mPa•s à 500 000 mPa•s ;
ladite composition liquide de résine époxy modifiée par un composé aminé présentant une viscosité inférieure à 1 000 000 mPa•s telle que mesurée à une température de -5°C à 45°C ; ladite composition comprenant en outre un composé phénolique, où la viscosité est mesurée selon le procédé indiqué dans la présente description.

9. Procédé de préparation d'une composition liquide de résine époxy modifiée par un composé aminé selon la revendication 8, comprenant en outre (c) un agent inhibiteur auto-polymérisant.

10. Procédé de préparation d'une composition liquide de résine époxy modifiée par un composé aminé selon la revendication 8, ledit au moins un composé de résine époxy liquide étant présent dans une concentration de 85 % en poids à 99,5 % en poids sur la base du poids des composants totaux dans la composition.

11. Composition de revêtement durcissable comprenant :
(A) au moins une composition liquide de résine époxy modifiée par un composé aminé selon la revendication 1 ; et
(B) au moins un agent de durcissement.

12. Procédé de préparation d'une composition durcissable comprenant le mélange de :
(A) au moins une composition liquide de résine époxy modifiée par un composé aminé selon la revendication 1 ; et
(B) au moins un agent de durcissement.

13. Revêtement thermodurcissable durci préparé à l'aide de la composition selon la revendication 1 ou la revendication 11.
